(19) Europäisches Patentamt European Patent Office Office européen des brevets

(11) **EP 2 250 463 B1**

(12) **EUROPEAN PATENT SPECIFICATION**

(45) Date of publication and mention
of the grant of the patent:
**09.11.2011 Bulletin 2011/45**

(51) Int Cl.:
***G01C 21/20*** (2006.01)   ***G09B 29/10*** (2006.01)

(21) Application number: **08852112.5**

(22) Date of filing: **21.11.2008**

(86) International application number:
**PCT/NL2008/000254**

(87) International publication number:
**WO 2009/067004 (28.05.2009 Gazette 2009/22)**

(54) **ELECTRONIC LAND AND SEA MAP SYSTEM**

ELEKTRONISCHES LAND- UND SEEKARTENSYSTEM

SYSTÈME ÉLECTRONIQUE DE CARTES MARITIME ET TERRESTRE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **21.11.2007 NL 1034732**

(43) Date of publication of application:
**17.11.2010 Bulletin 2010/46**

(73) Proprietor: **Nautical Information Services B.v.
9936 HX Delfzijl (NL)**

(72) Inventor: **WILLEM, Amels
NL-9746 AJ Groningen (NL)**

(74) Representative: **Grootscholten, Johannes A.M. et
al
Arnold & Siedsma
Sweelinckplein 1
2517 GK Den Haag (NL)**

(56) References cited:
**EP-A- 0 880 030        EP-A- 1 152 383
WO-A- 01/77984        JP-A- 2000 149 076
JP-A- 2003 345 240**

• **GEORGE ARTS (MARINE PRESS CANADA):
"Implication of ECDIS carriage requirements
from ENC costs point of view" PRESENTATION,
January 2007 (2007-01), XP002478523 Hong Kong
Ship Owners Association**

## Description

The present invention relates to an electronic land or sea map system.

Known electronic land or sea map systems aboard vehicles, such as ships, comprise at least the features of an device for displaying at least one of the land or sea maps from a memory and selection means for entering a selection of the land or sea map to be displayed from the memory. The memory is usually also located on board, but can be located remotely from the vehicle in order to display, upon request, a selected map aboard the vehicle once it has been transmitted. The administrative processing of such a known system is controlled by an organization to which most national cartographic associations are affiliated. Such a central organization is also responsible for issuing, upon request, user names and passwords for opening of maps by a user in the display means. The passwords are here usually related to the maps desired to display in the display means.

With such a strategy a central organization is therefore a priori necessary to provide the processing on the basis of which a vehicle, in particular a ship, gains access to the maps required during a journey. Communication means are also available at sea for the purpose of obtaining passwords for other maps at a later stage, for instance when it is necessary in an emergency situation to unexpectedly divert to a port other than the chosen destination. It is too expensive to take into account all possibilities and calamities and to "order" all the possibly necessary maps in the above described manner, and moreover also time-consuming because other possibilities, particularly related to calamities, can be overlooked. Such a system, when applied in the manner stated above, is moreover excessively expensive because all maps which are "ordered" and for which passwords are obtained must also be paid for, even if a possible calamity does not occur and it is not necessary to divert to a port other than the chosen destination.

In 1995 the IMO agreed a standard for electronic maps on board ships. This standard is referred to by the IMO, among others, as the S-57 standard. It was necessary for this purpose for cartographic associations and hydrographic services to start producing map material in accordance with this standard S-57, and the associated format was taken into use by the sea-going vessel Zeus and was supplied by the applicant of the present application, this in 2000. Such maps in the format of the S-57 standard are generally referred to as "Electronic Navigational Chart", or ENC for short. Since the introduction of the first maps and, before that, the creation of the S-57 standard, the coverage of ENC maps has increased rapidly. It is estimated that at least 90% of Europe is currently covered, or maps of at least 90% of European waters are available. Over 70% of worldwide trade routes have been mapped by means of ENCs in accordance with the S-57 standard.

In accordance with even more recent developments, it is no longer required for ships to have paper maps on board. This is a result of an amendment of the so-called SOLAS Convention and applies to ships sailing with ENCs. The lapsing of this requirement is briefly noted as a matter of course, and is of course subject to all manner of conditions other than just the availability of ENCs. Within Europe, and generally also far beyond, it is therefore very well possible at the moment to sail only with ENC maps. A captain is then free to have for instance only a limited set of paper maps to fall back on as support.

According to the known art, electronic maps are supplied to ships on the basis of the generation of a password for a determined map. This password is also referred to as a "permit". Using such a password or permit the ENC which the user has indicated to be necessary is retrieved or released. Once the user has entered the password or the permit, the user can retrieve and use, and if desired even update, the relevant map or ENC.

The maps or ENCs are stored on CDs. There are basic CDs and update CDs.

Illegal copying is combatted using the mechanism of passwords or permits, and access can only be gained to the maps to which a user is entitled after payment. A permit can also indicate a right to receive updates. This means for instance that if an ENC has been previously installed on the display device (such as an ECDIS) it can still be displayed but can no longer be updated if the permit is no longer valid. Under current regulations (SOLAS) every ship is however obliged to have up-to-date maps for its journey on board, and must therefore have a valid permit for the ENCs which it expects to use for its journey.

The known mechanism for securing the maps or ENCs by means of passwords or permits has now itself also been agreed as a standard, which is further referred to as the S-63 standard, and applies worldwide. The memories (CDs) must be physically brought on board a ship or other vehicle, and the passwords or permits can be sent in any number of different ways. This latter can for instance take place by telephone, by mail, by fax, by telex or by email. Currently most used is email, so that the ENCs or maps can quickly be made available on board. It is also possible to request passwords or permits by telephone. It is however required here to select in advance which route will be navigated in order to determine which ENCs or maps will be needed during the journey.

This causes a number of problems, in addition to those already mentioned above. A user, such as the captain of a ship, may often not know which maps or ENCs have been made available to him, or their name. It is thus difficult for users to first find the basic name referring to a specific map at the moment this user (the captain of a ship) needs the map in question. He will first have to find out the name of the relevant map.

Another drawback is that the maps or ENCs not only relate a specific area, but that in accordance with the S-57 standard multiple different levels of detail are usually available in each map of one area. A user may want a more detailed map and obtain an associated permit or password, although he will then also have to accept higher costs. If the user settles for a less detailed map the costs will be lower, although it is still the case that not only the areas but also the degree of detail must often be chosen in advance, i.e. prior to departure of the ship, in order to obtain the associated passwords or permits. A user must himself also determine beforehand for which term or period of use he wishes to acquire the user rights or permits, wherein applying for or payment for a user right or permit for a longer period of time is comparatively cheaper than doing this a number of times for shorter periods of time, although in the case of sporadic use it may be more favourable in terms of cost to acquire or pay for a permit for a shorter period of time. Users generally do not intuitively make a well-founded choice, and the available systems do not offer users any support or assistance here.

All in all, this system for making maps or ENCs available involves a great organizational load. Situations which may or may not occur must often be anticipated beforehand, while the maps of the relevant areas in a predetermined degree of detail must be made available prior to departure and the possibilities of obtaining other maps or more or less detail per map during a journey are limited.

The closest prior art, from which the features of the pre-characterising portion of the single appended independent claim are known, is admitted herein to be constituted by the disclosure of WO-01/77984.

The present invention has for its object to obviate or at least reduce the drawbacks of the known art, for which purpose an electronic land or sea map system is provided according to the present invention with all the features as defined in the appended set of claims, in particular also the features in the characterising portion of the single appended independent claim.

Such a system provides a high degree of freedom in respect of making available maps of relevant areas and the degree of detail which each map must be able to display. A user, such as the captain of the ship, has available all land and/or sea maps which are carried on board during a journey. The relevant maps and degree of detail of each map can be chosen in accordance with the conditions and requirement, while the storage ensures recording of data relating to the maps which are used and the degree of detail of each map used, whereby it is possible to make payment, at a later stage or simultaneously, for their use to a body which is responsible for making the maps available and therefore also responsible to a certain extent for the content thereof.

Hazardous situations can thus be prevented, for instance when a captain or other user must unexpectedly follow a different route than that anticipated beforehand, i.e. prior to departure. Without taking exceptional measures it is possible to dispose of all available maps, and payment for the use of the maps is then ensured in safe manner for the bodies responsible for collecting such a payment.

By employing a control to determine a preferred subscription type on the basis of criteria and following an algorithm, using the data in the storage (such as routes travelled or routes to be travelled or maps used, etcetera), the system as according to the present invention can either adapt itself or advise a user (subscriber to the services) about a valid permit duration and whether this can be modified so as to create a more favourable situation (final payment), and determine the most optimal durations of use from a cost viewpoint.

Discrepancies are an indication of an error or abuse of the system. Various communication protocols are possible during the voyage and after arrival at a place of destination such as a port.

The invention has various preferred embodiments, which are defined in the dependent claims. It is thus possible according to the invention for at least the storage and the readout means to be secure. It is thus possible to ensure to an even greater extent that it can actually be made possible for a body responsible for collecting payments for the use of the maps to collect the relevant payments without the possibility of the system being corrupted by unreliable users.

It is further possible that a tracking system is provided according to the invention for tracking vehicles, such as ships, along their routes with at least the display device and the selection means on board the vehicle. On busier navigation routes such tracking systems are already applied extensively and it is only necessary to keep a file comparable to a ship's log, to be able to distile therefrom which maps should have been used. The degree of detail of the retrieved maps can then however be tracked less well, although this is still a viable option, particularly when, for instance in the future, the degree of detail is no longer of influence in determining the level of a payment to be paid. This can now already be a viable solution in systems other than that according to the S-57 standard.

A system according to the present invention can further have the feature that the storage is positioned remotely of the system. A ship or other vehicle can for instance be provided with a position-determining system, and such a system can be adapted to automatically generate messages to the outside world, for instance by e-mail, so that a ship or other vehicle can be tracked while travelling a route on the basis of data relating to the current position made available by or from the ship or other vehicle itself. It is also possible for the system according to the invention to itself record at set times which maps or map are or is in use. This information can be sent to the remote storage for recording thereof. The advantage of such measures, which can be well secured, is that the degree of detail in each retrieved map can also be recorded and can be made immediately known to a central register in the remote storage. It is thus once again possible to ensure reliable payment for the use.

A system according to the present invention can further have the feature that the storage forms part of a voyage data recorder (VDR) which in determined circumstances is mandatory for shipping. To the data, which are usually stored therein in obligatory manner, can be added the data relating to used maps and degree of detail therein, so that a highly reliable record can be effected while a route is being travelled. Reading of these data takes place in the same way as before in respect of the voyage data themselves, and this is a well-secured system. Payment can here also be made on a momentary basis or after a route has been travelled.

It can further be favourable if the readout means can be connected to an automatic payment system relating to the use of the selected land or sea maps. This can be a momentary connection at any point in time when a map is retrieved or a degree of detail is modified. This can thus also be recorded on the ship and read afterwards. It is in any case possible to prevent many limitations creeping into the use of a system such as that according to the prior part.

The present invention will be further elucidated hereinbelow on the basis of an exemplary embodiment as shown in the accompanying figures, in which:

Fig. 1 shows a schematic representation of a system according to the present invention; and
Fig. 2 shows a geographical view with a route to be travelled by a ship therein and maps to be used therein.

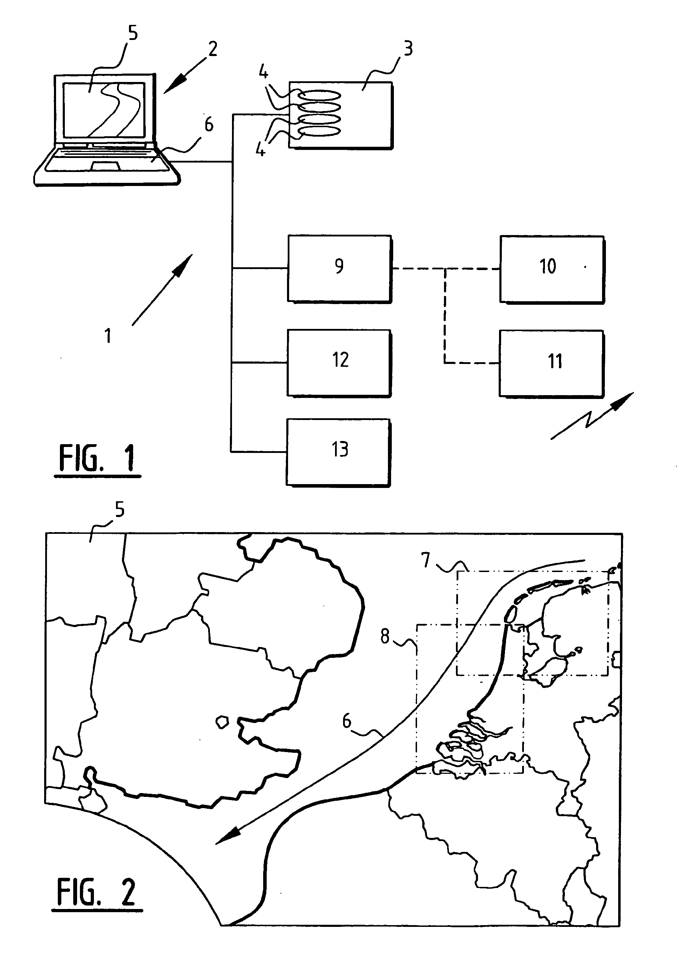

Figure 1 shows a system according to the present invention. System 1 comprises a computer 2, of which other modules in figure 1 can form part or which can be connected to computer 2 in accordance with the specific device or configuration of an embodiment of system 1 according to the present invention. These modules comprise an electronic memory in the form of a database 3 with a number of CDs 4 therein. A number of land or sea maps are stored on the CDs. These maps can be displayed on a screen 5 of computer 2. A keyboard 6 can also be used as embodiment of selection means, optionally in combination with a mouse or trackball (not shown), for the purpose of making a selection or at least entering an input into computer 2 for a selection of the land or sea map to be displayed from database 3 on CDs 4. Such a system is also known as ECDIS, this being the generally used term for the system as specified here. Standards and hard definitions have been agreed for ECDIS, and the acronym ECDIS stands for "Electronic Chart Display and Information System".

Figure 2 shows such a display in screen 5. The display shows a sea route 6. Also shown is which further maps are available. Maps 7 for waters in and around the north of the Netherlands and maps 8 for waters in and around the west of the Netherlands are thus displayed in broken lines. These maps 7, 8 do not have to be separate maps, but can also represent designations where it is possible to zoom in on screen 5 using the keyboard and/or the mouse (not shown). If such a map 7, 8 or detail of a larger map is shown in its entirety on screen 5, more detail can also be shown hereon than in the larger image as shown in figure 2. Additionally or alternatively, details can also be hidden in the larger display of fig. 2 until they are retrieved. During use of the system a user such as the captain of a seagoing vessel can thus actuate computer 2 for the purpose of showing in the display of fig. 2 shipwrecks which would otherwise remain hidden. This would mean the use at a level of detail involving additional costs, and this can be recorded according to the present invention for momentary or later payment for this use.

According to the present invention a user of computer 2 can thus have instantly available all maps on CDs 4 in database 3, this on demand. Various means can be utilized for the purpose of payment for this use. These means will be described hereinbelow with reference to the embodiment of fig. 1, wherein a selection of these means can be applied, or a combination of various or all of these means. The means can form part of computer 2 or comprise external modules, or form part of other systems with which computer 2 can then be integrated or to which it can at least be connected. It is thus possible for computer 2 to be connected to an input/output module 9. With this input/output module 9 data relating to retrieved maps and the degree of detail applied therein can be transmitted to a so-called VDR 10, which is a route recorder. In some circumstances and for some ships such a VDR 10 is mandatory as a separate system for recording of the travelled route. There are no technical objections at all to transmitting information about used maps and degree of detail therein to VDR 10 via the input/output module 9 for the purpose of recording of these used maps and degree of detail therein in the VDR for storage thereof together with the travelled route. Additionally or alternatively, a communication module 11 can be provided for preferably wireless communication in respect of an actual position of the ship along route 6. If such a communication module is applied, storage of the used maps and the degree of detail therein takes place remotely of the ship, for instance on shore, preferably with a body which also provides for collection of payments for the use of the maps.

Conversely, it is also possible for a memory 12 to be positioned on board the ship, which can preferably form part of computer 2, for instance in a secure part of the working memory or on the hard disk of this computer. This memory 12 then serves to record used or opened maps and the degree of detail displayed therein so as to enable read out of memory 12 upon arrival at a destination, which can then be effected for instance by an employee of the body responsible for payment for the use of the maps. Computer 2 can also be adapted and/or programmed such that the part of memory 12 with the record of the used maps therein is automatically read upon arrival at a destination, after which the relevant data can then still be provided to the relevant body via input/output module 9. A secure communication protocol, many of which are generally available in the art, can be provided for this purpose. No inventive work is required to provide such a secure communication protocol for a system such as the present system according to this invention.

A position-determining module 13 can further form part of computer 2 or be connected thereto. With such a position-determining module 13 it is possible to establish a relation between a used map and the national association or a cartographic institute under whose responsibility the relevant map has been made available. On the basis of such data a payment for the relevant association or national cartographic institute can be calculated. It is here also once again possible to take into account the degree of detail which has been opened or made available to the user in a determined map.

Diverse variants and embodiments are thus possible, all lying within the scope of the present invention as defined in the appended claims. It is thus possible that other ways can also be envisaged for storage of data relating to used maps and degree of detail therein. Embodiments have been mainly described in the foregoing which allow for storage of the relevant data in a computer on board the ship or remotely on shore, although it is not possible to foresee where else storage might take place. Also described in the foregoing are the embodiments in which momentary positions are transmitted or stored each time to enable momentary updating of an invoice at a remote location, or in which such an invoice is only drawn up upon arrival at the place of destination. A hybrid form is however also possible, wherein both variants are applied in order to further increase the reliability of the system by bringing together and comparing, upon arrival at the place of destination, the momentary and remotely recorded data and the data held on board or on the computer.

For payment purposes the proposed system will have to make or at least offer choices to the users thereof in respect of the most optimal duration of use of the maps. A map or cell will usually have a number of options, wherein applying for or payment for a user right or permit for a longer period of time is comparatively cheaper (per use) than doing this a number of times for shorter periods of time, although in the case of sporadic use the overall cost for short-term use may work out lower.

The system according to the invention can here make an optimization in accordance with the algorithm below.

The first time, the system will calculate a cell for the shortest possible duration and then measure how often and how long the cell is used during this period. In order to calculate the optimal duration of validity, use can be made of aspects and factors which can be derived from memory 12 or VDR 10. The following factors can here be taken into account in the considerations and calculations:

1. An increment factor ($V$) between the price ($P1$) for current duration ($D1$) and the price ($P2$) for the subsequent shortest duration ($D2$) can be calculated as:

$$V = P2 / ((D2/D1) * P1)$$

As the value of $V$ increases, it is more important to select a longer duration of permit or use.

2. The average time between the actual use of the cell ($H$) can also form a relevant aspect in an embodiment of the system according to the present invention.

The ratio between the current duration ($D1$) of a permit and $H$ can here determine the answer to the question of whether the current purchased or paid duration is "right" or not. "Right" is here understood to mean that the use associated with these parameters results for the user in a favourable, and preferably most favourable possible, situation (payment). When $D1/H$ is greater than 1, the necessity of selecting a longer duration then increases.

3. The average time ($AD$) between hits (i.e. the use of a map or cell or part of either of the two which occurs in practice) for the whole or part of a fleet can further serve as guide for an effective and efficient use of the maps by the fleet (or part thereof). A measure can thus as it were be given for the popularity of a determined cell or map. This popularity can be expressed here as:

$$P = D1/AD$$

The greater the popularity ($P$), the greater the need to select a longer duration. For the value $AD$ it is of course possible here to opt for a summation over the ships in the fleet ( $AD$).

For the purpose of determining a so-called Cell Rank three weighting factors are taken into consideration: WV, WH and WP for respectively the weighting factors for the increment factor; the average time between hits; and the popularity.

The Cell Rank (CR) is then calculated as follows:

$$CR = (WV*V) * (WH*(D1/H))*(1+(WP*P))$$

If the CR falls below a determined value (CRmin), a shorter duration will be selected if available. If CR rises above a determined value (CRmax), a longer duration will be selected if available.

It is noted that the values of the weighting factors can be optimized experimentally. Tests with the values WH = 1.0, WV = 1.0 and WP = 0.1 have already shown that a robust algorithm is provided with highly useful and usable indicators as to whether a permit or subscription form for/of a cell or map or map part can or even should be modified. Other values are of course also possible, depending on the wishes and requirements of a user (subscriber).

In this way the system as according to the present invention can either adapt itself or advise a user (subscriber to the services) about a valid permit duration and whether this can be modified so as to create a more favourable situation (final payment), and determine the most optimal durations of use from a cost viewpoint.

Discrepancies are an indication of an error or abuse of the system. Various communication protocols are possible during the voyage and after arrival at a place of destination such as a port.

Owing to the number of transactions for processing that can be expected, use is made here within the scope of the present invention of some form of Electronic Data Exchange (EDI) with the map-producing or publishing body, so that processing can take place fully automatically.

It is further possible to integrate the systems according to the present invention in a VDR, which is being made mandatory in an increasing number of circumstances, so that the electronic map systems, to the extent necessary, will also find increasing wider application. Application of the electronic maps is already perceived by many users as desirable, and coupling to the so-called VDR systems will result in such VDR systems being used increasingly often, even when application thereof is not yet required, for instance when a ship or a boat has a lower tonnage than the limit above which VDR systems have been made mandatory. Diverse additional and alternative embodiments are thus possible, all of which lie within the scope of the present invention. These do not all have to be explicitly described, as such additional and alternative embodiments will occur to the skilled person after examination of the foregoing within the scope of the present invention.

**Claims**

1. Electronic land or sea map system, comprising:

   - an electronic memory of at least two land or sea maps;
   - an image display device for displaying at least one of the land or sea maps from the memory;
   - selection means for entering a selection of the land or sea map to be displayed from the memory;
   - a storage for recording along a route at least one type of data from the group at least comprising: routes travelled; routes to be travelled; and maps used; and
   - readout means co-acting with the storage during use,
   **characterised by**
   a control at least connectable to the storage, wherein said control is arranged to determine, on the basis of predetermined criteria in accordance with an algorithm using the data stored in the storage, a preferred subscription type relating to the land or sea maps.

2. Electronic land or sea map system as claimed in claim 1, wherein at least the storage and the readout means are secure.

3. Electronic land or sea map system as claimed in claim 1 or 2, further comprising a tracking system for tracking vehicles, such as ships, during travel along routes with at least the image display device and the selection means on board the vehicle.

4. Electronic land or sea map system as claimed in claim 1, 2 or claim 3, wherein the storage is positioned remotely of the system.

5. Electronic land or sea map system as claimed in any one of the preceding claims, wherein the storage forms part of a Voyage Data Recorder (VDR) which in determined circumstances is mandatory for shipping.

6. Electronic land or sea map system as claimed in any one of the preceding claims, wherein the readout means can be connected to an automatic payment system relating to the use of the selected land or sea maps.

7. Electronic land or sea map system as claimed in any one of the preceding claims, wherein the predetermined criteria comprise at least one of the aspects from the group comprising: cost of a type of use or subscription or permit in accordance with differing periods of use; an increment factor V for another, preferably longer-term subscription type or permit; a decrement factor for another shorter-term subscription type or permit; an average time AD between separate uses of a map or part thereof; and a popularity P of the map or a part thereof to be calculated from the average time.

8. Electronic land or sea map system as claimed in claim 7, wherein a value can be calculated from a selection of aspects from the group with weighting factors, which value provides a measure for a required desirability to retain or to change a subscription type.

9. Electronic land or sea map system as claimed in claim 8, wherein the calculation produces a value (CR) in accordance with the algorithm:

$$CR = (WV*V) * (WH*(D1/H))*(1+(WP*P))$$

wherein V is an increment factor which can be expressed as V = P2 / ((D2/D1) * P1) wherein P2 is the cost of a subscription type based on a longer time duration, P1 is the cost of a current subscription type, and D1 and D2 are periods of time of separate subscription types or permits associated with the respective costs P1 and P2, WV is a weighting factor for the increment factor V, H is an average time between actual uses of a specific map, cell or part thereof, WH is a weighing factor associated with the average time, AD is the average time between the hits for the whole or part of a fleet, P is the popularity of a determined cell or map, which can be expressed as P = D1/AD, and WP is a weighting factor associated with this popularity.

10. Electronic land or sea map system as claimed in claim 9, wherein WH = 1.0; WV = 1.0 and WP = 0.1.


**Patentansprüche**

1. Elektronisches Land- oder Seekartensystem, aufweisend:

    - einen elektronischen Speicher für wenigstens zwei Land- oder Seekarten,
    - eine Bildanzeigeeinrichtung zur Anzeige wenigstens einer der Land- oder Seekarten aus dem Speicher,
    - eine Auswahleinrichtung zur Eingabe einer Auswahl der anzuzeigenden Land- oder Seekarte aus dem Speicher,
    - einen Datenspeicher zur Aufzeichnung entlang einer Route wenigstens eines Typs von Daten aus der Gruppe, die wenigstens aufweist: gereiste Routen, zu reisende Routen und benutzte Karten, und
    - eine Ausleseeinrichtung, die während der Benutzung mit dem Datenpeicher zusammen agiert,

    **gekennzeichnet durch** eine Steuerung, die wenigstens mit dem Datenspeicher verbindbar ist, wobei die Steuerung eingerichtet ist zum Bestimmen, auf der Basis vorbestimmter Kriterien entsprechend einem die im Datenpeicher gespeicherten Daten benutzenden Algorithmus, eines bevorzugten Subskriptionstyps in Bezug auf die Land- oder Seekarten.

2. Elektronisches Land- oder Seekartensystem nach Anspruch 1, wobei wenigstens der Datenpeicher und die Ausleseeinrichtung sicher sind.

3. Elektronisches Land- oder Seekartensystem nach Anspruch 1 oder 2, weiter aufweisend ein Verfolgungssystem zum Verfolgen von Fahrzeugen wie beispielsweise Schiffen während eines Reisens entlang Routen mit wenigsten der Bildanzeigeeinrichtung und der Auswahleinrichtung an Bord des Fahrzeugs.

4. Elektronisches Land- oder Seekartensystem nach Anspruch 1, 2 oder Anspruch 3, wobei der Datenspeicher entfernt vom System positioniert ist.

**5.** Elektronisches Land- oder Seekartensystem nach einem der vorhergehenden Ansprüche, wobei der Datenspeicher einen Teil eines Voyage Data Recorder (VDR, Reisedatenrekorder)) bildet, der unter bestimmten Umständen für die Schifffahrt vorgeschrieben ist.

**6.** Elektronisches Land- oder Seekartensystem nach einem der vorhergehenden Ansprüche, wobei die Ausleseeinrichtung mit einem automatischen Bezahlungssystem in Bezug auf die Benutzung der ausgewählten Land- oder Seekarten verbunden werden kann.

**7.** Elektronisches Land- oder Seekartensystem nach einem der vorhergehenden Ansprüche, wobei die vorbestimmten Kriterien wenigstens einen der Aspekte aus der Gruppe aufweisen, die aufweist: Kosten eines Typs von Benutzung oder Subskription oder Erlaubnis entsprechend differierenden Benutzungsperioden, einen Inkrementfaktor V für einen anderen Subskriptionstyp oder eine anderen Erlaubnis, der bzw. die vorzugsweise längerfristig ist, einen Dekrementfaktor für einen anderen Subskriptionstyp oder eine andere Erlaubnis, der bzw. die kürzerfristig ist, eine mittlere Zeit AD zwischen separaten Benutzungen einer Karte oder eines Teils davon und einer von der mittleren Zeit zu berechnenden Popularität P der Karte oder eines Teils davon.

**8.** Elektronisches Land- oder Seekartensystem nach Anspruch 7, wobei ein Wert berechnet werden kann von einer Auswahl von Aspekten aus der Gruppe mit gewichteten Faktoren, welcher Wert ein Maß für eine zum Beibehalten oder Ändern eines Subskriptionstyps erforderliche Begehrtheit darstellt.

**9.** Elektronisches Land- oder Seekartensystem nach Anspruch 8, wobei die Berechnung einen Wert CR entsprechend dem Algorithmus:

$$CR = (WV*V) * (WH*(D1/H)) * (1+(WP*P))$$

erzeugt, wobei V ein Inkrementfaktor ist, der als V = P2/((D2/D1) * P1) ausgedrückt werden kann, wobei P2 die Kosten eines auf einer längeren Zeitdauer basierten Subskriptionstyps ist, P1 die Kosten eines laufenden Subskriptionstyps sind und D1 und D2 die Zeitperioden von mit den jeweiligen Kosten P1 und P2 assoziierten separaten Subskriptionstypen oder Erlaubnissen sind, WV ein Gewichtungsfaktor für den Inkrementfaktor V ist, H eine mittlere Zeit zwischen tatsächlichen Benutzungen einer spezifischen Karte, Zelle oder eines Teils davon ist, WH ein mit der mittleren Zeit assoziierter Gewichtungsfaktor ist, AD die mittlere Zeit zwischen den Treffern für die ganze oder einen Teil einer Flotte ist, P die Popularität einer bestimmten Zelle oder Karte ist, die als P = D1/AD ausgedrückt werden kann, und WP ein mit dieser Popularität assoziierter Gewichtungsfaktor ist.

**10.** Elektronisches Land- oder Seekartensystem nach Anspruch 9, wobei WH = 1,0, WV = 1,0 und WP = 1,0.

**Revendications**

**1.** Système électronique de cartes terrestres ou maritimes, comprenant :

- une mémoire électronique d'au moins deux cartes terrestres ou maritimes ;
- un dispositif d'affichage d'image pour afficher au moins l'une des cartes terrestres ou maritimes de la mémoire ;
- des moyens de sélection pour entrer une sélection de la carte terrestre ou maritime à afficher de la mémoire ;
- un dispositif de stockage pour enregistrer le long d'un itinéraire au moins un type de données du groupe comprenant au moins : des itinéraires parcourus ; des itinéraires à parcourir ; et des cartes utilisées ; et
- des moyens d'extraction agissant conjointement avec le dispositif de stockage en utilisation,
**caractérisé par**
une commande pouvant être connectée au moins au dispositif de stockage, dans lequel ladite commande est agencée pour déterminer, sur la base de critères prédéterminés conformément à un algorithme utilisant les données mémorisées dans le dispositif de stockage, un type d'abonnement préféré concernant les cartes terrestres ou maritimes.

**2.** Système électronique de cartes terrestres ou maritimes selon la revendication 1, dans lequel au moins le dispositif de stockage et les moyens d'extraction sont sécurisés.

3. Système électronique de cartes terrestres ou maritimes selon la revendication 1 ou 2, comprenant en outre un système de suivi pour suivre des véhicules, tels que des navires, pendant leur déplacement le long d'itinéraires avec au moins le dispositif d'affichage d'image et les moyens de sélection à bord du véhicule.

4. Système électronique de cartes terrestres ou maritimes selon la revendication 1, 2 ou 3, dans lequel le dispositif de stockage est positionné à distance du système.

5. Système électronique de cartes terrestres ou maritimes selon l'une quelconque des revendications précédentes, dans lequel le dispositif de stockage fait partie d'un enregistreur de données de voyage (VDR) qui, dans des circonstances déterminées, est obligatoire pour la navigation.

6. Système électronique de cartes terrestres ou maritimes selon l'une quelconque des revendications précédentes, dans lequel les moyens d'extraction peuvent être connectés à un système de paiement automatique concernant l'utilisation des cartes terrestres ou maritimes sélectionnées.

7. Système électronique de cartes terrestres ou maritimes selon l'une quelconque des revendications précédentes, dans lequel les critères prédéterminés comprennent au moins l'un des aspects du groupe comprenant : le coût d'un type d'utilisation ou d'abonnement ou de permis en fonction de différentes périodes d'utilisation ; un facteur d'incrémentation V pour un autre, de préférence un type d'abonnement ou permis à plus long terme ; un facteur de décrémentation pour un autre type d'abonnement ou de permis à plus court terme ; un temps moyen AD entre des utilisations distinctes d'une carte ou d'une partie de celle-ci ; et une popularité P de la carte ou d'une partie de celle-ci à calculer à partir du temps moyen.

8. Système électronique de cartes terrestres ou maritimes selon la revendication 7, dans lequel une valeur peut être calculée à partir d'une sélection d'aspects dans le groupe avec des facteurs de pondération, laquelle valeur fournit une mesure d'un souhait requis de conserver ou de modifier un type d'abonnement.

9. Système électronique de cartes terrestres ou maritimes selon la revendication 8, dans lequel le calcul produit une valeur (CR) conformément à l'algorithme :

$$CR = (WV*V) * (WH * (D1/H)) * (1 + (WP*P))$$

où V est un facteur d'incrémentation qui peut être exprimé par $V = P2 / ((D2/D1) * P1)$ où P2 est le coût d'un type d'abonnement basé sur une plus longue durée, P1 est le coût d'un type d'abonnement actuel, et D1 et D2 sont des périodes de temps de types d'abonnement ou de permis distincts associés aux coûts respectifs P1 et P2, WV est un facteur de pondération pour le facteur d'incrémentation V, H est un temps moyen entre des utilisations réelles d'une carte spécifique, d'une cellule ou d'une partie de celle-ci, WH est un facteur de pondération associé au temps moyen, AD est le temps moyen entre les occurrences pour une flotte entière ou une partie de celle-ci, P est la popularité d'une cellule ou d'une carte déterminée, qui peut être exprimée par $P = D1/AD$, et WP est un facteur de pondération associé à cette popularité.

10. Système électronique de cartes terrestres ou maritimes selon la revendication 9, dans lequel WH = 1,0 ; WV = 1,0 et WP = 0,1.

FIG. 1

FIG. 2

**REFERENCES CITED IN THE DESCRIPTION**

**Patent documents cited in the description**

- WO 0177984 A